# EUROPEAN PATENT APPLICATION

(11) **EP 4 391 646 A1**
(43) Date of publication of application: **26.06.2024**
(21) Application number: 22868710.9
(22) Date of filing: 25.05.2022
(51) Int. Cl.: H04W 36/00, H04W 48/08

(54) **NETWORK SELECTION METHOD BASED ON PEER-TO-PEER NETWORK, AND COMMUNICATION APPARATUS**

(30) Priority: 18.09.2021 CN 202111101846
(71) Applicant: Huawei Technologies Co., Ltd., Shenzhen, Guangdong 518129 (CN)
(72) Inventor: LI, Wenzheng, Shenzhen, Guangdong 518129 (CN); ZHU, Qianghua, Shenzhen, Guangdong 518129 (CN); WU, Wenfu, Shenzhen, Guangdong 518129 (CN)
(74) Representative: Körber, Martin Hans
(86) International application number: PCT/CN2022/094964
(87) International publication number: WO 2023/040333

(57) **Abstract**

A peer-to-peer network based network selection method, and a communication apparatus are provided. UE that accesses an SNPN implements network selection, reselection, or switching based on peer-to-peer network information of the UE, to ensure service continuity of the UE. The method includes: A terminal device determines a second network based on information about a peer-to-peer network of a first network, where the first network corresponds to the terminal device, and the first network is a standalone non-public network SNPN; and the terminal device accesses the second network.

## Description

### CROSS-REFERENCE TO RELATED APPLICATIONS

This application claims priority to Chinese Patent Application No. 202111101846.0, filed with the China National Intellectual Property Administration on September 18, 2021 and entitled "PEER-TO-PEER NETWORK BASED NETWORK SELECTION METHOD AND COMMUNICATION APPARATUS", which is incorporated herein by reference in its entirety.

### TECHNICAL FIELD

This application relates to the field of wireless communication technologies, and in particular, to a peer-to-peer network based network selection method and a communication apparatus.

### BACKGROUND

A non-public network (non-public network, NPN) is a non-public 5th generation (the 5th generation system, 5GS) communication network used for providing a network service for a specific user. The NPN may be implemented depending on support of a public land mobile network (public land mobile network, PLMN) (also referred to as a public network for short), or may be implemented without depending on support of the PLMN. The NPN implemented without depending on support of the PLMN is referred to as a standalone NPN (standalone NPN, SNPN) (also referred to as a private network or a dedicated network or a non-public network for short).

In an area continuously covered by the PLMN and the NPN, a plurality of access networks (such as NPNs or PLMNs) may simultaneously exist in a same coverage cell. In addition, according to the agreement between network operators of the PLMN and the NPN, for a specific terminal device (user equipment, UE), these access networks are in a peer-to-peer network relationship.

Currently, UE that accesses the SNPN cannot perform, between peer-to-peer networks, operations that ensure service continuity, such as network selection, reselection, and switching.

### SUMMARY

According to a peer-to-peer network based network selection method and a communication apparatus in embodiments of this application, UE that accesses an SNPN implements network selection, reselection, or switching based on peer-to-peer network information of the UE, to ensure service continuity of the UE.

According to a first aspect, an embodiment of this application provides a peer-to-peer network based network selection method. The peer-to-peer network based network selection method includes: A terminal device may determine a second network based on information about a peer-to-peer network of a first network, where the first network corresponds to the terminal device, and the first network is a standalone non-public network SNPN. The terminal device may further access the second network.

According to the method, network selection, reselection, or switching of the terminal device that accesses the SNPN (that is, the first network) can be implemented, and a target access network (that is, the second network) is determined based on the peer-to-peer network of the SNPN. This can ensure network quality of the target access network determined by the terminal device, improve reliability of network selection, reselection, and switching, and ensure service processing continuity.

In a possible design, the terminal device is in an idle state, and that the terminal device determines a second network based on information about a peer-to-peer network of a first network includes: If a coverage area of the first network does not include a target camping area of the terminal device, and a coverage area of at least one of the peer-to-peer network includes the target camping area, the terminal device may determine the second network from the at least one peer-to-peer network.

In this design, the target access network is determined based on the peer-to-peer network, so that network selection in a mobility process of the terminal device in the idle state can be implemented, thereby ensuring network quality of the target access network determined by the terminal device, and improving reliability of network selection, reselection, and switching.

In a possible design, that the terminal device determines the second network from the at least one peer-to-peer network includes: If at least one peer-to-peer SNPN exists in the peer-to-peer network, the terminal device may determine the second network from the at least one peer-to-peer SNPN; or if no peer-to-peer SNPN exists in the peer-to-peer network, the terminal device may set an access mode to a public land mobile network PLMN access mode, and determine the second network from the at least one peer-to-peer network.

In this design, on the basis that the terminal device accesses the SNPN, to ensure service processing reliability of the terminal device, the peer-to-peer SNPN is preferentially selected from the peer-to-peer network, so that the terminal device can preferentially select the peer-to-peer SNPN as the target access network, thereby ensuring processing reliability of the terminal device. In addition, if there is no peer-to-peer SNPN in the peer-to-peer network, the terminal device may further select a peer-to-peer PLMN after changing the access mode. In this way, a service processing scenario of the terminal device can be better matched, and service processing continuity of the terminal device can be ensured.

In a possible design, the method further includes: The terminal device may determine a target camping cell from first cells of the target camping area, where the first cells are corresponding to the first network; or the terminal device may determine a target camping cell from second cells of the target camping area, where the second cells are corresponding to the second network, and a cell of the target camping area does not include a cell corresponding to the first network.

In this design, on the basis that the terminal device determines the target access network based on the peer-to-peer network, the terminal device may further determine the target camping cell. If the cell corresponding to the first network exists in the target camping area of the terminal device, the terminal device may determine the target camping cell without changing a network. If the cell corresponding to the first network does not exist in the target camping area of the terminal device, the terminal device may preferentially determine whether the cell corresponding to the peer-to-peer network exists in the target camping area. If the cell corresponding to the peer-to-peer network exists, the terminal device preferentially accesses the cell corresponding to the peer-to-peer network. In this way, network quality of the target access network determined by the terminal device can be ensured, reliability of network selection, reselection, and switching can be improved, and service processing continuity can be ensured.

In a possible design, the first network may be an SNPN with which the terminal device registers; or the first network may be an SNPN that is in an accessible network list of the terminal device and that meets a first priority requirement; or if the terminal device exits an SNPN access mode, the first network may be a PLMN that is in the accessible network list of the terminal device and that meets a second priority requirement.

In this design, the terminal device may determine the target access network or the target camping cell not only based on the peer-to-peer network of the accessed SNPN, but also based on another SNPN or the PLMN that is in the accessible network list of the terminal device and that meets a priority requirement, and a peer-to-peer network of the another SNPN or the PLMN. In this way, in a scenario in which the target camping area is not covered by the accessed SNPN and is not covered by the peer-to-peer network that accesses the SNPN, the terminal device may further select another accessible network as the target access network and determine the target camping cell. In this way, network quality of the target access network determined by the terminal device can be ensured, reliability of network selection, reselection, and switching can be improved, and service processing continuity can be ensured.

In a possible design, the terminal device is in a connected state, and the method further includes: The terminal device may receive first indication information from an access network device, where the first indication information indicates the terminal device to switch to the second network.

In this design, for the terminal device in the connected state, the terminal device may determine the target access network based on an indication of the access network device. It should be understood that during implementation, the access network device may alternatively determine the target access network for the terminal device based on the peer-to-peer network of the first network of the terminal device.

In a possible design, the terminal device camps on the first network, and the method further includes: The terminal device may receive second indication information from an access network device, where the second indication information indicates the terminal device to reselect the second network.

In this design, for the terminal device camping on the first network, the access network device may further determine a network with better network quality for the terminal device as the target access network of the terminal device. In this way, network quality of the target access network determined by the terminal device can be ensured, reliability of network selection, reselection, and switching can be improved, and service processing continuity can be ensured.

In a possible design, the second indication information may be carried in a radio resource control RRC release (release) message. In this design, the RRC release message may indicate network or cell reselection information of the terminal device, so that the terminal device can reselect a network, and it is ensured that the terminal device accesses a target access network with better network quality.

In a possible design, the information about the peer-to-peer network of the first network may include an equivalent group, the equivalent group may include information about at least two networks, any two networks are peer-to-peer networks with each other, and the networks include the first network.

In this design, a manner of configuring information about peer-to-peer networks of a plurality of terminal devices can be simplified in an equivalent group form. In this way, compared with a configuration manner of using an equivalent list in the conventional technology in which information about a corresponding peer-to-peer network needs to be configured for each terminal device, in the configuration manner of using an equivalent group, a corresponding equivalent list does not need to be configured for each access network. A plurality of networks are configured in the equivalent group, so that a peer-to-peer network of any network can be determined, thereby improving configuration efficiency.

According to a second aspect, an embodiment of this application provides a peer-to-peer network based network selection method. The method includes: An access network device may determine a second network based on information about a peer-to-peer network of a first network, where the first network corresponds to the access network device and a terminal device, and the first network is an SNPN. The access network device further sends indication information to the terminal device, where the indication information indicates the terminal device to determine the second network.

In a possible design, the terminal device is in a connected state, and that the access network device determines a second network based on information about a peer-to-peer network of a first network includes: If a coverage area of the first network does not include a target camping area of the terminal device, and a coverage area of at least one of the peer-to-peer network includes the target camping area, the access network device may determine the second network from the at least one peer-to-peer network.

In a possible design, the method further includes: The access network device may determine a target camping cell of the terminal device from first cells of the target camping area, where the first cell is a cell corresponding to the first network; or the access network device may determine a target camping cell of the terminal device from second cells of the target camping area, where the second cell is a cell corresponding to the second network, and a cell of the target camping area does not include a cell corresponding to the first network.

In a possible design, the first network may be an SNPN with which the terminal device registers, or the first network may be an SNPN that is in an accessible network list of the terminal device and that meets a first priority requirement.

In a possible design, the terminal device is in a connected state, and that the access network device sends indication information to the terminal device includes: The access network device may send first indication information, where the first indication information may indicate the terminal device to switch to the second network.

In a possible design, the terminal device camps on the first network, and that the access network device sends indication information to the terminal device includes: The access network device may send second indication information, where the second indication information may indicate the terminal device to reselect the second network.

In a possible design, the second indication information may be carried in an RRC release message.

In a possible design, the information about the peer-to-peer network of the first network may include an equivalent group, the equivalent group may include information about at least two networks, any two of the networks are peer-to-peer networks with each other, and the networks include the first network.

According to a third aspect, an embodiment of this application provides a communication apparatus. The apparatus may have a function of implementing the terminal device according to the first aspect or any one of the possible designs of the first aspect, or have a function of implementing the access network device according to the second aspect or any one of the possible designs of the second aspect. The apparatus may be a device, or may be a chip included in the device.

The functions of the communication apparatus may be implemented by hardware, or may be implemented by hardware executing corresponding software. The hardware or the software includes one or more modules, units, or means (means) corresponding to the functions.

In a possible design, a structure of the apparatus includes a processing module and a transceiver module. The processing module is configured to support the apparatus in having the function of implementing the terminal device according to the first aspect or any one of the possible designs of the first aspect, or having the function of implementing the access network device according to the second aspect or any one of the possible designs of the second aspect. The transceiver module is configured to support communication between the apparatus and another communication device. For example, when the apparatus is the terminal device, the apparatus may receive indication information from the access network device. The communication apparatus may further include a storage module. The storage module is coupled to the processing module, and stores program instructions and data that are necessary for the apparatus. In an example, the processing module may be a processor, the communication module may be a transceiver, and the storage module may be a memory. The memory may be integrated with the processor, or may be disposed separately from the processor.

In another possible design, a structure of the apparatus includes the processor, and may further include the memory. The processor is coupled to the memory, and may be configured to execute computer program instructions stored in the memory, so that the apparatus performs the method according to each of the foregoing aspects or any one of the possible designs of each aspect. Optionally, the apparatus further includes a communication interface, and the processor is coupled to the communication interface. When the apparatus is the access network device, the communication interface may be a transceiver or an input/output interface. When the apparatus is a chip included in the access network device, the communication interface may be an input/output interface of the chip. Optionally, the transceiver may be a transceiver circuit, and the input/output interface may be an input/output circuit.

According to a fourth aspect, an embodiment of this application provides a chip system, including a processor. The processor is coupled to a memory, the memory is configured to store a program or instructions, and when the program or the instructions are executed by the processor, the chip system is enabled to implement the method according to each of the foregoing aspects or any one of the possible designs of each aspect.

Optionally, the chip system further includes an interface circuit, and the interface circuit is configured to exchange code instructions to the processor.

Optionally, there may be one or more processors in the chip system, and the processor may be implemented through hardware or may be implemented through software. When the processor is implemented through the hardware, the processor may be a logic circuit, an integrated circuit, or the like. When the processor is implemented through the software, the processor may be a general-purpose processor, and is implemented by reading software code stored in the memory.

Optionally, there may also be one or more memories in the chip system. The memory may be integrated with the processor, or may be disposed separately from the processor. For example, the memory may be a non-transitory processor, for example, a read-only memory ROM. The memory and the processor may be integrated on a same chip, or may be separately disposed on different chips.

According to a fifth aspect, an embodiment of this application provides a computer-readable storage medium, the computer-readable storage medium stores a computer program or instructions, and when the computer program or the instructions are executed, a computer is enabled to perform the method according to each of the foregoing aspects or any one of the possible designs of each aspect.

According to a sixth aspect, an embodiment of this application provides a computer program product, and when a computer reads and executes the computer program product, the computer is enabled to perform the method according to each of the foregoing aspects or any one of the possible designs of each aspect.

For beneficial effects of any one of the second aspect to the sixth aspect, refer to beneficial effects of the possible designs in the first aspect for details. Details are not described herein again.

### BRIEF DESCRIPTION OF DRAWINGS

FIG. 1a is a schematic diagram of a network architecture of a communication system to which this application is applicable;
FIG. 1b is a schematic diagram of a network architecture of a (radio) access network device to which this application is applicable;
FIG. 2 is a schematic diagram of a network architecture of a 5G communication system to which this application is applicable;
FIG. 3 shows another possible network architecture to which an embodiment of this application is applicable;
FIG. 4 is a schematic diagram of a scenario of a peer-to-peer network based network selection method to which an embodiment of this application is applicable;
FIG. 5 is a schematic flowchart of a registration process of UE to which an embodiment of this application is applicable;
FIG. 6 is a schematic flowchart of obtaining information about a peer-to-peer network by a (R)AN according to an embodiment of this application;
FIG. 7 is a schematic flowchart of a peer-to-peer network based network selection method according to an embodiment of this application;
FIG. 8 is a schematic diagram of a scenario of another peer-to-peer network based network selection method to which an embodiment of this application is applicable;
FIG. 9 is another schematic flowchart of a peer-to-peer network based network selection method according to an embodiment of this application;
FIG. 10 is a schematic flowchart of performing network switching by an access network device according to an embodiment of this application;
FIG. 11 is another schematic flowchart of performing network switching by an access network device according to an embodiment of this application;
FIG. 12 is still another schematic flowchart of a peer-to-peer network based network selection method according to an embodiment of this application;
FIG. 13 is yet another schematic flowchart of a peer-to-peer network based network selection method according to an embodiment of this application; and
FIG. 14, FIG. 15, or FIG. 16 is a schematic diagram of a structure of a communication apparatus according to an embodiment of this application.

### DESCRIPTION OF EMBODIMENTS

The following further describes in detail embodiments of this application with reference to the accompanying drawings.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a 5th generation (5th generation, 5G) mobile communication system or a new radio (new radio, NR) system, a future communication system, or another similar communication system.

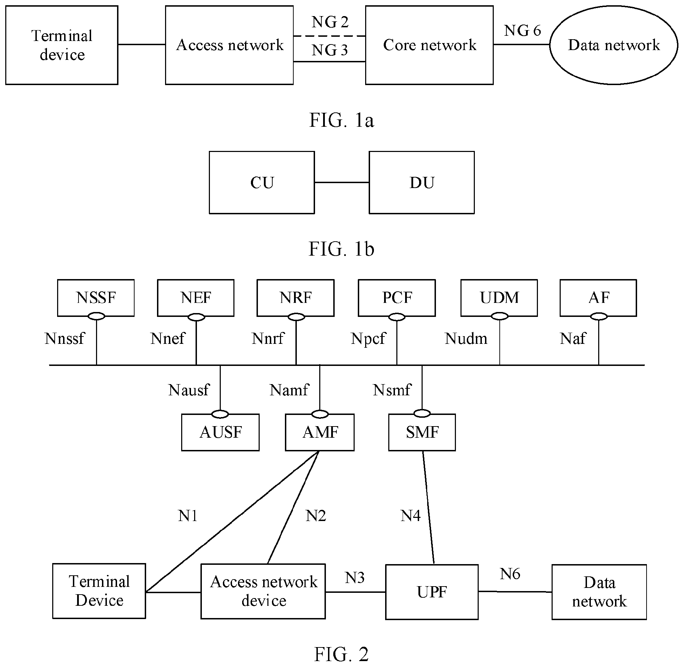

FIG. 1a is a schematic diagram of a network architecture of a communication system to which this application is applicable. Based on a requirement of a 3rd generation partnership project (3rd generation partnership project, 3GPP) protocol standard, the network architecture includes four components: a terminal device (user equipment, UE), an access network (access network, AN), a core network (core), and a data network (data network, DN). The access network may be a radio access network (radio access network, RAN).

The terminal device, the (radio) access network, and the core network are main parts of the foregoing network architecture, and may be logically divided into two parts: a user plane and a control plane. The control plane is responsible for management of a mobile network, and the user plane is responsible for transmission of service data. For example, as shown in FIG. 1a, in a 5G communication system, a next generation (next generation, NG) 2 reference point is located between a (radio) access network control plane and a core network control plane, an NG 3 reference point is located between a (radio) access network user plane and a core network user plane, and an NG 6 reference point is located between the core network user plane and the data network.

The following describes each component of the foregoing network architecture in detail.
1. The terminal device, a device having a wireless transceiver function, is an entry for a mobile user to interact with a network. The terminal device can provide a basic computing capability and a storage capability, display a service window to the user, and receive an operation input from the user. The terminal device may communicate with the core network or the data network by using the (radio) access network, and exchange speech and/or data with the (radio) access network. For example, in the 5G communication system, a next generation terminal device (NextGen UE, NG UE) may establish a signal connection and a data connection to the (radio) access network by using a new radio (new radio, NR) technology, to send a control signal and service data to a network.

For example, the terminal device may include a wireless terminal device, a mobile terminal device, a device to device (device to device, D2D) terminal device, a vehicle to everything (vehicle to everything, V2X) terminal device, a machine-to-machine/machine-type communication (machine-to-machine/machine-type communication, M2M/MTC) terminal device, an internet of things (internet of things, IoT) terminal device, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), or a user device (user device). For example, the terminal device may be a mobile phone (mobile phone), a pad (Pad), a computer with a wireless transceiver function, a portable, pocket-sized, and handheld mobile apparatus with a built-in computer, or the like. For another example, the terminal device may alternatively be a virtual reality (virtual reality, VR) terminal device, an augmented reality (augmented reality, AR) terminal device, a wireless terminal in industrial control (industrial control), a wireless terminal in self driving (self driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a terminal device in a future evolved public land mobile network (public land mobile network, PLMN), or a vehicle device, customer premises equipment (customer premises equipment, CPE), or the like in V2X communication. For another example, the terminal device may alternatively be a device such as a personal communication service (personal communication service, PCS) phone, a cordless phone, a session initiation protocol (session initiation protocol, SIP) phone, a wireless local loop (wireless local loop, WLL) station, or a personal digital assistant (personal digital assistant, PDA).

As an example rather than a limitation, the terminal device may alternatively be a wearable device. The wearable device may also be referred to as a wearable intelligent device, an intelligent wearable device, or the like, and is a general term of wearable devices that are intelligently designed and developed for daily wear through a wearable technology, for example, glasses, gloves, watches, clothes, and shoes. The wearable device is a portable device that is worn directly on the body or integrated onto clothes or an accessory of a user. The wearable device is not only a hardware device, but also implements a powerful function through software support, data exchange, and cloud interaction. In a broad sense, wearable intelligent devices include full-featured and large-sized devices that can implement all or some of functions without depending on smartphones, for example, smart watches or smart glasses, and include devices that are dedicated to only one type of application function and need to collaboratively work with other devices such as smartphones, for example, various smart bands, smart helmets, or smart jewelry for monitoring physical signs. If the various terminal devices described above are located in a vehicle (for example, placed in the vehicle or mounted in the vehicle), the terminal devices may be all considered as vehicle-mounted terminal devices. For example, the vehicle-mounted terminal devices are also referred to as on-board units (on-board units, OBUs).

The terminal device may be deployed on land including an indoor or outdoor environment, in a handheld, wearable, or in-vehicle manner, or may be deployed on a water surface (for example, in a ship), or may be deployed in air (for example, on an airplane, in a balloon, or on a satellite). Embodiments of this application do not limit a specific technology, a device form, an application scenario, and a name used by the terminal device.

2. The (radio) access network is deployed at a location near the terminal device, provides a network access function for an authorized user in a specific area, and can determine transmission tunnels of different quality based on a user level, a service requirement, and the like to transmit user data. The (radio) access network can manage and properly use its own resources, provide an access service for the terminal device as required, and be responsible for forwarding control signals and service data between the terminal device and the core network.

A (radio) access network device is deployed in the (radio) access network, and is configured to connect the terminal device to a wireless network. The (radio) access network device may be generally connected to the core network through a wired link (for example, an optical fiber cable). The (radio) access network device may also be referred to as a RAN device/node, or a base station.

For example, the (radio) access network device may include a base station, an evolved NodeB (evolved NodeB, eNodeB) in an LTE system or an LTE-Advanced (LTE-Advanced, LTE-A) system, a next generation NodeB (next generation NodeB, gNB) in a 5G communication system, a transmission reception point (transmission reception point, TRP), a base band unit (base band unit, BBU), an access point (access point, AP) in a wireless local area network (wireless local area networks, WLAN), an integrated access and backhaul (integrated access and backhaul, IAB) node, a base station in a future mobile communication system, an access node in a Wi-Fi system, or the like. The (radio) access network device may alternatively be a module or unit that completes some functions of the base station, for example, a central unit (central unit, CU) or a distributed unit (distributed unit, DU).

For example, in a network structure, the (radio) access network device may be a CU node, a DU node, or a (radio) access network device including the CU node and the DU node, as shown in FIG. 1b. FIG. 1b is a schematic diagram of a network architecture of a (radio) access network device to which this application is applicable. The CU node is configured to support a protocol such as a radio resource control (radio resource control, RRC) protocol, a packet data convergence protocol (packet data convergence protocol, PDCP), or a service data adaptation protocol (service data adaptation protocol, SDAP). The DU node is configured to support a radio link control (radio link control, RLC) layer protocol, a media access control (medium access control, MAC) layer protocol, and a physical layer protocol.

The (radio) access network device may be deployed on land including an indoor or outdoor environment, in a handheld, wearable, or in-vehicle manner, or may be deployed on a water surface (for example, in a ship), or may be deployed in air (for example, on an airplane, in a balloon, or on a satellite). Embodiments of this application do not limit a specific technology, a device form, an application scenario, and a name used by the (radio) access network device. In embodiments of this application, the (radio) access network device may be referred to as an access network (AN) device for short. Unless otherwise specified, an access network device in the following may be referred to as the (radio) access network device.

3. The core network is responsible for maintaining subscription data of the mobile network, managing a network element of the mobile network, and providing, for the terminal device, functions such as session management, mobility management, policy management, and security authentication. To be specific, when the terminal device is attached, the core network provides network access authentication for the terminal device. When the terminal device has a service request, the core network allocates a network resource to the terminal device. When the terminal device moves, the core network updates a network resource for the terminal device. When the terminal device is idle, the core network provides a fast recovery mechanism for the terminal device. When the terminal device is detached, the core network releases a network resource for the terminal device. When the terminal device has service data, the core network provides a data routing function for the terminal device, for example, forwards uplink data to the data network, or receives downlink data from the data network and forwards the downlink data to the (radio) access network, thereby sending the downlink data to the terminal device.

4. The data network is configured to provide a business service for the user. In an actual communication process, a client is usually located on the terminal device, and a server is usually located on the data network. The data network may be a private network, for example, a local area network, may be an external network that is not managed and controlled by an operator, for example, the internet (Internet), or may be a dedicated network jointly deployed by operators, for example, a network that provides an IP multimedia network subsystem (IP multimedia core network subsystem, IMS) service.

FIG. 2 shows a more specific network architecture to which an embodiment of this application is applicable. The network architecture may be a network architecture of the 5G communication system. As shown in FIG. 2, the network architecture includes the terminal device, an access network device, various types of network elements/function entities of the core network, and the data network.

The core network user plane includes a user plane function (user plane function, UPF). The core network control plane includes but is not limited to: an access and mobility management function (access and mobility management function, AMF), a session management function (session management function, SMF), an authentication server function (authentication server function, AUSF), a network slice selection function (network slice selection function, NSSF), a network exposure function (network exposure function, NEF), a network function repository function (network function repository function, NRF), a policy control function (policy control function, PCF), unified data management (unified data management, UDM), and an application function (application function, AF).

Specifically, the AMF is mainly responsible for access management and mobility management of the terminal device, for example, responsible for status maintenance of the terminal device, accessibility management of the terminal device, forwarding of a mobility management non-access-stratum (mobility management non-access-stratum, MM NAS) message, and forwarding of a session management (session management, SM) N2 message.

The SMF is mainly responsible for session management in the mobile network, including establishing a session for the terminal device, and allocating and releasing resources for the session. The resources include quality of service (quality of service, QoS) of the session, a session path, a forwarding rule, and the like. For example, the SMF allocates an internet protocol (internet protocol, IP) address to the terminal device, and selects the UPF that provides a packet forwarding function.

The UPF is mainly responsible for connecting to the external network, and forwarding a user data packet according to a routing rule of the SMF. For example, the UPF sends uplink data to the data network or another UPF, and sends downlink data to another UPF or the access network device.

The AUSF is mainly responsible for performing security authentication on the terminal device.

The NSSF is mainly responsible for selecting a proper network slice for a service of the terminal.

The NEF exposes some network functions to an application in a controlled manner.

The NRF is mainly responsible for providing a storage function and a selection function of network functional entity information for another network element.

The PCF is mainly responsible for user policy management, including policy authorization, service quality, and charging rule generation, and delivers a corresponding rule to the UPF by using the SMF to complete installation of a corresponding policy and rule.

The UDM is mainly responsible for managing user data, including subscription information, contexts, policy information, and the like. It should be noted that although not shown in FIG. 2, the network architecture shown in FIG. 2 may further include a unified data repository (unified data repository, UDR), and a function of the UDM may be implemented through interaction with the UDR. The UDR is configured to store data required when the UDM performs an operation of the UDM, and the UDM is configured to interact with another network element. In an actual implementation, the UDM and the UDR may be two independent physical entities, or the UDR may be integrated into the UDM. This is not limited.

The AF is mainly responsible for providing service data of various applications for a control plane network element in a communication network of an operator, or obtaining data information and control information of the network from the control plane network element in the communication network.

For example, in the network architecture shown in FIG. 2, an interface between the terminal device and the AMF is referred to as an N1 interface, an interface between the access network device and the AMF is referred to as an N2 interface, an interface between the access network device and the UPF is referred to as an N3 interface, an interface between the UPF and the SMF may be referred to as an N4 interface, and an interface between the UPF and the data network is referred to as an N6 interface. Certainly, in a future communication system, names of these interfaces may remain unchanged, or may be replaced with other names. This is not limited in this application.

It should be noted that, the core network control plane may use a service-based architecture, and each control plane network element is connected to a service bus. Interaction between control plane network elements is performed in a service invoking manner in place of a point-to-point communication manner in a conventional core network architecture. In the service-based architecture, the control plane network element opens up a service to another control plane network element for the another control plane network element to invoke the service. In point-to-point communication, there is a set of specific messages for a communication interface between control plane network elements, and the specific messages can be used only by the control plane network elements at both ends of the interface during communication.

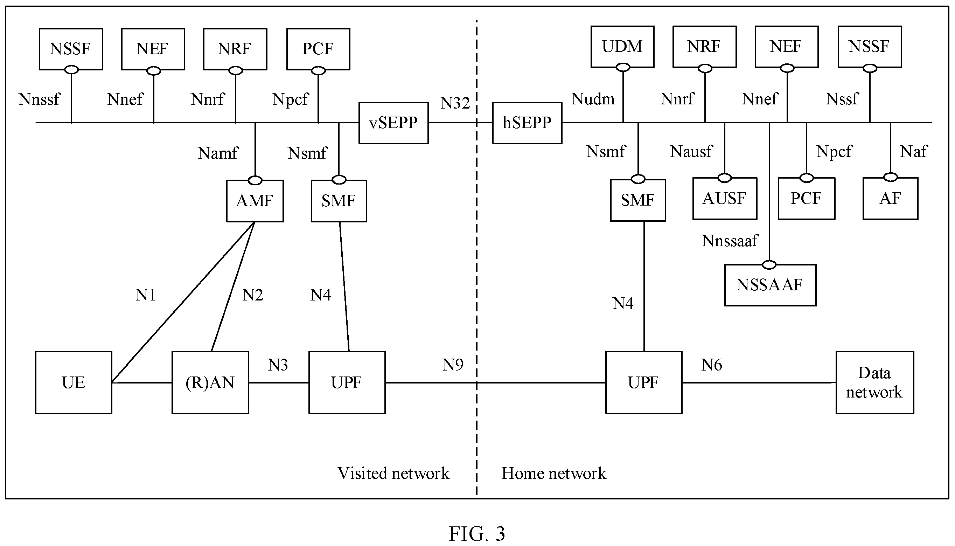

FIG. 3 shows another possible network architecture to which an embodiment of this application is applicable. The network architecture includes a visited network and a home network of the terminal device, and the visited network and the home network coexist and interwork with each other.

The visited network may be a visited PLMN or a visited NPN. The visited network indicates a network accessed by the terminal device in a current area. The visited network and the home network may be a same network, or may be different networks. In other words, a mobile country code (mobile country code, MCC) and a mobile network code (mobile network code, MNC) included in an international mobile subscriber identity (international mobile subscriber identity, IMSI) of the user on the terminal device may not be completely consistent with an MCC and an MNC in the visited network. For the terminal device, after coverage of the currently accessed visited network is lost, another accessible network may be selected as a new visited network.

The home network may be a home PLMN, or may be a home NPN, indicating a network to which the user belongs. In other words, the MCC and the MNC included in the IMSI of the user on the terminal device are consistent with an MCC and an MNC in the home network. For a user, there is only one home network of the user.

As shown in FIG. 3, the visited network may interwork with a home security edge protection proxy (home security edge protection proxy, hSEPP) in the home network by using a visited security edge protection proxy (visited security edge protection proxy, vSEPP). The vSEPP and the hSEPP establish a connection by using an N32 interface and implement a protection policy, to process each control plane message in cross-network signaling. The vSEPP and the hSEPP can enhance internal security of a network, and can ensure security of control plane information across networks, so as to protect security of a network in which the SEPP is located from an external attack.

In addition, in the home network, authentication and authorization based on network switching selection may be implemented through a network slice-specific authentication and authorization function (network slice-specific authentication and authorization function, NSSAAF).

It should be noted that the network elements/function entities in the foregoing possible network architectures may be network elements in a hardware device, may be software functions running on dedicated hardware, or may be instantiated virtualization functions on a platform (for example, a cloud platform). Optionally, the network elements or the function entities may be implemented by one device, may be jointly implemented by a plurality of devices, or may be different functional modules in one device. This is not specifically limited in embodiments of this application.

The network architectures and service scenarios described in embodiments of this application are intended to describe the technical solutions in embodiments of this application more clearly, and do not constitute a limitation on the technical solutions provided in embodiments of this application. A person of ordinary skill in the art may know that, as a communication system architecture evolves and a new service scenario emerges, the technical solutions provided in embodiments of this application are also applicable to similar technical problems.

The terms "system" and "network" may be used interchangeably in embodiments of this application. "A plurality of" means two or more. In view of this, "a plurality of" in embodiments of this application may also be understood as "at least two". "At least one" may be understood as one or more, for example, one, two, or more. For example, "including at least one" means including one, two, or more, and does not limit items that are included. For example, if at least one of A, B, and C is included, A, B, C, A and B, A and C, B and C, or A, B, and C may be included. Similarly, understanding of the description such as "at least one type" is similar. "At least one of the following" or a similar expression thereof indicates any combination of the following, including any combination of one or more of the following. For example, "at least one of A, B, and C" includes A, B, C, AB, AC, BC, or ABC. "and/or" describes an association relationship between associated objects and indicates that three relationships may exist. For example, A and/or B may indicate the following cases: Only A exists, both A and B exist, and only B exists. In addition, the character "/" usually indicates an "or" relationship between the associated objects unless otherwise specified.

Unless otherwise specified, ordinal numbers such as "first" and "second" in embodiments of this application are used to distinguish between a plurality of objects, but are not intended to limit a sequence, a time sequence, priorities, or importance of the plurality of objects. In addition, descriptions of "first" and "second" do not necessarily indicate that objects are different.

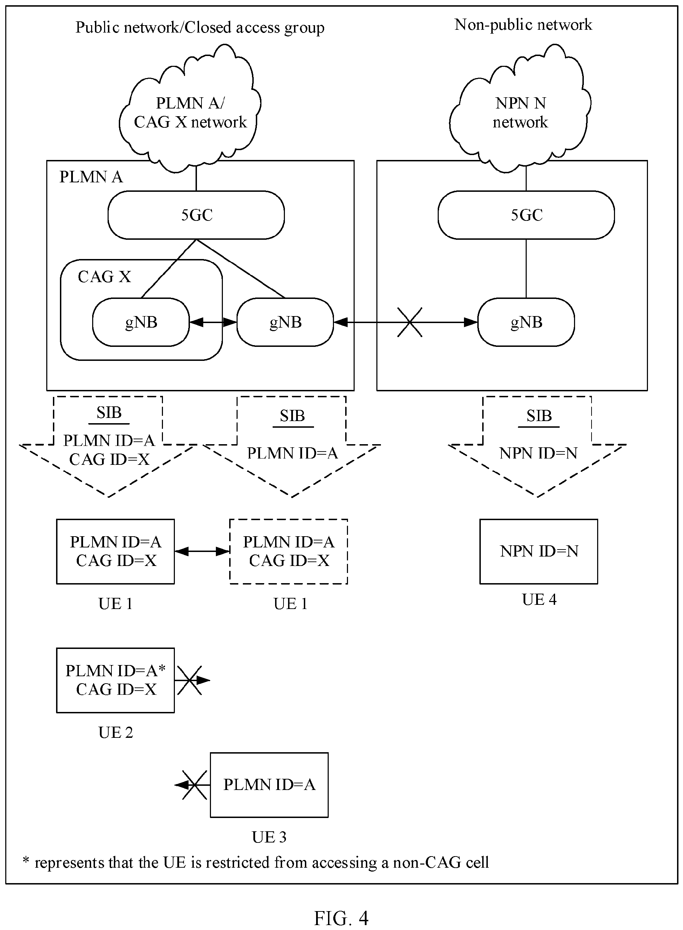

For example, FIG. 4 is a schematic diagram of a scenario of a peer-to-peer network based network selection method to which an embodiment of this application is applicable. The application scenario includes a PLMN and an NPN. The NPN further includes an NPN that is implemented depending on support of the PLMN and that is referred to as a public network integrated NPN (public network integrated NPN, PNI-NPN), and an SNPN that is implemented without depending on support of the PLMN.

### 1. PLMN

In daily life, the PLMN usually provides a network service for UE. The PLMN is a network that is established and operated by a government or an operator authorized by the government, to provide a land mobile communication service for the public. Different PLMN identifications (identifications, IDs) may be used to distinguish between different PLMNs. The PLMN ID includes a mobile country code (mobile country code, MCC) and a mobile network code (mobile net code, MNC). The MCC uniquely indicates a country to which a mobile subscriber belongs. For example, the MCC of China is 460. The MNC uniquely indicates a network in the country. For example, the MNC of China Mobile is 00, and the MNC of China Unicom is 01.

The UE needs to select a network when accessing a base station. A network selection process is PLMN selection. The PLMN selection may include the following steps:
A1: An access stratum (access stratum, AS) of the UE scans, based on a capability of the access stratum, radio frequency (radio frequency, RF) channels (channels) of all NR bands (bands) to find an available PLMN. The UE finds a cell with a best RSRP in each frequency and then read a system information block 1 (system information block 1, SIB1) of the cell to obtain a PLMN ID. For example, it is assumed that the PLMN ID shown in FIG. 4 is A.
A2: The AS of the UE reports a PLMN list (list) to a non-access stratum (non-access stratum, NAS) of the UE. The PLMN list includes PLMN IDs obtained by the AS of the UE.
A3: After receiving the PLMN list reported by the AS of the UE, the NAS of the UE selects one PLMN ID as the PLMN to be used by the UE.

When the UE selects the PLMN, a PLMN to be searched for may be any PLMN in the following: a registered PLMN (registered PLMN, RPLMN), where the RPLMN is a PLMN registered before the UE is powered off or disconnected from the network; an equivalent PLMN (equivalent PLMN, EPLMN), where the EPLMN is a PLMN with a same priority as the PLMN currently selected by the UE; a home PLMN (home PLMN, HPLMN), where an identification of the HPLMN is stored in a mobile phone subscriber identity module (subscriber identity module, SIM) card, and each SIM card has only one HPLMN that is burnt in the SIM card before delivery; or an equivalent HPLMN (equivalent HPLMN, EHPLMN) that is a PLMN with a same priority as the HPLMN.

A4: After selecting the PLMN ID, the NAS of the UE may provide an EPLMN list and a forbidden tracking area (forbidden tracking area, forbidden TA) for the AS of the UE based on the selected PLMN ID, and the AS of the UE may perform cell selection and reselection based on the EPLMN list and the forbidden TA.

### 2. PNI-NPN

The PNI-NPN may be implemented with a network slice in the PLMN. To control the UE to access the PNI-NPN, an access network device may use a closed access group (closed access group, CAG) function. The CAG function is as follows: On one hand, one or more CAGs supported by a CAG cell are broadcast by the CAG cell. Each CAG can identify one group of UEs, and only the UEs in the group are allowed to access the corresponding CAG cell, and other UEs are not allowed to access the corresponding CAG cell. On the other hand, a CAG subscription is configured for UE to notify the UE whether the UE can access the 5GS only by using the CAG cell and which CAGs (or available CAGs) the UE is allowed to access. In this way, in the 5GS, the CAG cell may determine, based on the CAG subscription of the UE, whether to allow the UE to access.

The PNI-NPN may distinguish between different CAGs by using CAG IDs. For example, it is assumed that the CAG ID shown in FIG. 4 is X.

As shown in FIG. 4, when the UE performs network switching in the 5GS, if a target cell is a CAG cell, and none of CAG identifiers supported by the CAG cell is a part of a CAG subscription list of the UE (for example, UE 3 in FIG. 4), a source access network of the UE 3 should not switch the UE to a target access network, or the target cell should reject an N2-based switching process. If the UE is allowed to access the 5GS only by using the CAG cell, a source access network of the UE should not switch the UE to a non-CAG cell, or the target access network should reject the N2-based switching process. As shown in FIG. 4, UE 2 is restricted from accessing the non-CAG cell.

### 3. SNPN

The SNPN may usually provide a network for specific UE, for example, a specific campus network or factory network.

Different SNPNs may be distinguished with different NPN IDs. For example, it is assumed that the NPN ID shown in FIG. 4 is N. Alternatively, PLMN IDs and NPN IDs may be used to identify different SNPNs. The PLMN ID may be an intrinsic value reserved by a third-party operator, or may be a specific value of a PLMN operator that deploys the SNPN.

During implementation of this application, a cell corresponding to the SNPN may broadcast, by using a broadcast message, the PLMN ID and the NPN ID that identify the cell. The UE selects whether to access the SNPN based on cell broadcast information and an accessible network list. If the UE finds that the accessible network list includes the NPN ID or the PLMN ID and the NPN ID corresponding to the broadcast message of the SNPN, the UE may access the SNPN; or if the UE finds that the accessible network list does not include the NPN ID or the PLMN ID and the NPN ID, the UE does not access the SNPN.

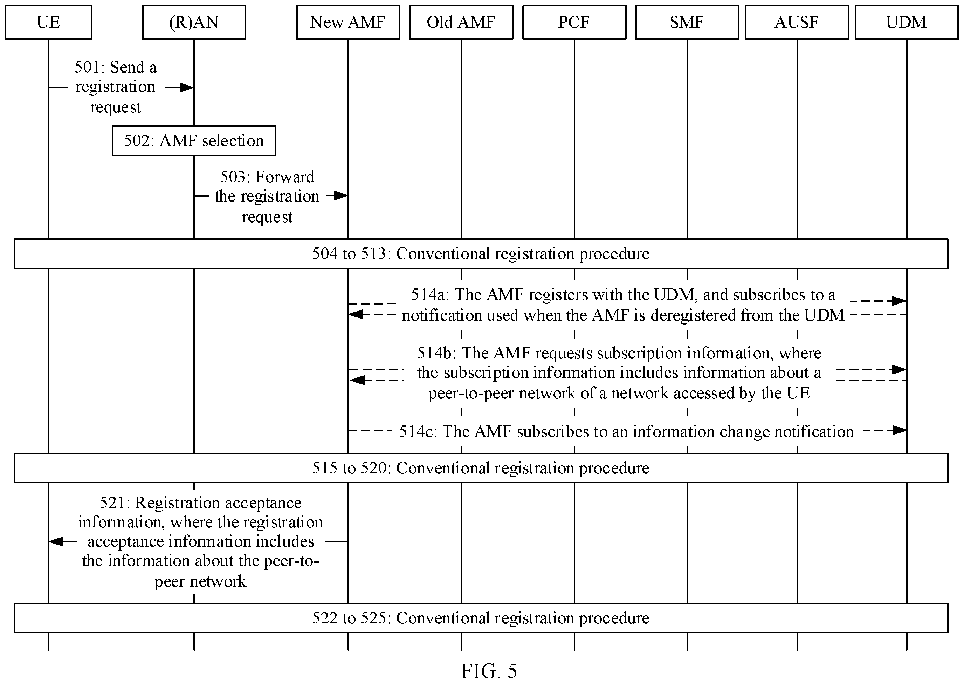

FIG. 5 is a schematic flowchart of a registration process of UE to which an embodiment of this application is applicable. In a process in which the UE registers with an SNPN, the UE may obtain preconfigured information about a peer-to-peer network that corresponds to the SNPN, so as to further implement network selection based on the obtained peer-to-peer network of the UE. FIG. 5 may include the following steps.

S501: The UE sends a registration request to a (R)AN. For example, the UE may send a Registration Request message to the (R)AN in a visited network, to initiate a general registration procedure. The (R)AN may be configured to connect the UE to the SNPN.

S502: The (R)AN selects an AMF based on identity information of the UE.

S503: The (R)AN forwards the registration request to the AMF by using an N2 message. The N2 message may be an uplink NAS transport message or an initial UE message.

For S504 to S513, refer to content related to AUSF selection, authentication, and UDM selection that is recorded in an existing procedure in section 4.2.2.2 of TS 23.502 in the 3GPP standard. Details are not described in this application again.

The following S514a to S514c are an interaction process between the AMF and UDM.

S514a: The AMF registers with the UDM, and subscribes to a notification provided for the AMF when the AMF is deregistered from the UDM.

S514b: The AMF requests subscription information. In this embodiment of this application, the subscription information includes information about a peer-to-peer network of the UE. For example, the AMF exchanges a Nudm_SDM_Get Request/Response message with the UDM, so that the AMF obtains the subscription information of the UE from the UDM. The information about the peer-to-peer network may be in a form of an equivalent list shown in Table 1-1 described below, or in a form of an equivalent group shown in Table 1-2, or may be in another form that may indicate the information about the peer-to-peer network of the UE.

S514c: The AMF subscribes to an information change notification. During implementation of this application, if the information about the peer-to-peer network of the UE is updated, the AMF may obtain updated subscription information from the UDM. The updated subscription information includes updated information about the peer-to-peer network.

For S515 to S520, refer to content related to PCF selection recorded in an existing procedure in section 4.2.2.2 of TS 23.502 in the 3GPP standard. Details are not described in this application again.

S521: The UE receives registration acceptance information sent by a new AMF. During implementation of this application, the registration acceptance information includes the information about the peer-to-peer network. Optionally, if the UE stores the information about the peer-to-peer network, and the registration acceptance information includes the updated information about the peer-to-peer network, the UE updates and replaces the information that is about the peer-to-peer network and that is stored in the UE.

For S522 to S525, refer to content recorded in an existing procedure in section 4.2.2.2 of TS 23.502 in the 3GPP standard. Details are not described in this application again.

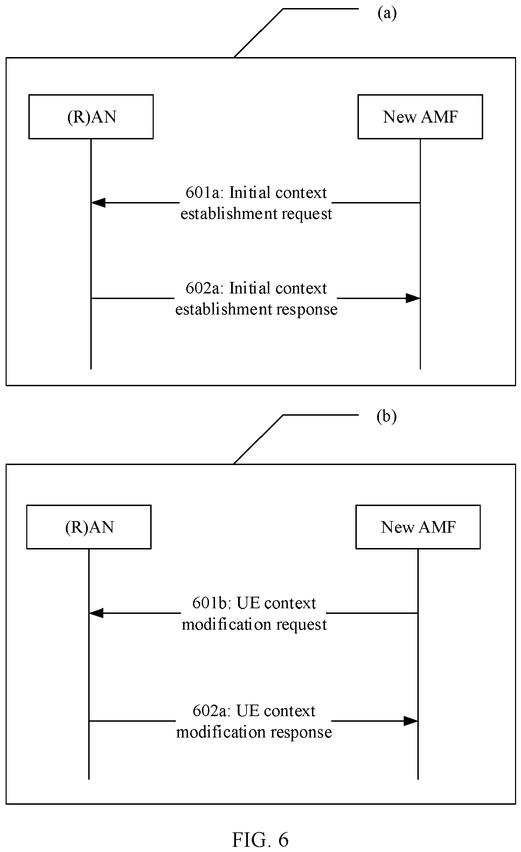

It should be noted that the (R)AN may also obtain the information about the peer-to-peer network of the UE. FIG. 6 is a schematic flowchart of obtaining information about a peer-to-peer network by a (R)AN according to an embodiment of this application. The (R)AN may obtain, by using a UE initial context establishment procedure or a UE context modification procedure, updated information about a peer-to-peer network of an access network of UE. For example, the UE initial context establishment procedure shown in (a) in FIG. 6 includes the following steps. S601a: The (R)AN receives an initial context establishment request sent by a new AMF. S602a: The (R)AN sends an initial context establishment response to the new AMF. During implementation of this application, the information about the peer-to-peer network of the UE may be carried in the initial context establishment request, so that the (R)AN obtains the information about the peer-to-peer network.

The UE context modification procedure shown in (b) in FIG. 6 includes the following steps. S601b: The (R)AN receives a context modification request sent by the new AMF. S602b: The (R)AN sends a context modification response to the new AMF. During implementation of this application, the information about the peer-to-peer network of the UE may be carried in the context modification request, so that the (R)AN updates the information about the peer-to-peer network.

During implementation of this application, the UE and the AMF may obtain or update the information about the peer-to-peer network of the UE in a process in which the UE registers with the SNPN. The (R)AN may obtain or update the information about the peer-to-peer network of the UE in the UE initial context establishment procedure or the UE context modification procedure. Therefore, in a scenario in which the UE needs to perform network selection, a process of selecting a target access network for the UE may be performed based on the information about the peer-to-peer network of the UE, so that efficiency in a scenario in which the UE performs cell handover, camping, or the like may be further improved.

With reference to the description in the background, currently, the UE that accesses the SNPN cannot implement, based on the peer-to-peer network, operations that ensure service continuity, such as network selection, reselection, and switching. In view of this, an embodiment of this application provides a peer-to-peer network based network selection method. The UE that accesses the SNPN implements network selection, reselection, or switching based on peer-to-peer network information of the UE. In addition, an embodiment of this application further provides a technical solution that can support configuration of information about a peer-to-peer network of an access network of UE. To be specific, the peer-to-peer network of the access network of the UE is determined based on an equivalent group. A specific implementation is described in the following content through embodiments with reference to the accompanying drawings.

A design idea of this embodiment of this application is as follows. In a process in which the UE initiates registration in the SNPN, the UE may obtain or update the information about the peer-to-peer network of the SNPN accessed by the UE, as shown in the registration procedure of the UE in FIG. 5. In other words, for the information about the peer-to-peer network of the UE, it should be noted that the information about the peer-to-peer network of the UE is also updated as the access network of the UE changes. Based on this, when the UE needs to perform network selection, reselection, switching, or the like, network selection may be performed based on the information about the peer-to-peer network of the UE, so that service continuity can be better ensured.

In the foregoing design idea, it may be understood that the information about the peer-to-peer network of the UE is preconfigured during implementation of this application. The preconfigured information about the peer-to-peer network may be stored in UDM of a home SNPN of the UE and/or in the UE as a part of the subscription information of the UE. In this way, in a process in which the UE registers with the SNPN, the UE may store, in the UDM and the UE, the information that is about the peer-to-peer network of the SNPN and that is obtained in the registration process as the information about the peer-to-peer network of the access network of the UE. In addition, if the UDM and the UE store the information about the peer-to-peer network of the UE, as the access network of the UE changes, the UE may update and store the updated information that is about the peer-to-peer network and that is obtained in the registration process as new information about the peer-to-peer network of the UE, so that the UE subsequently performs network selection, reselection, or switching.

Optionally, a manner of configuring the information about the peer-to-peer network provided in this embodiment of this application is an equivalent list (equivalent list) form. For example, the access network of the UE is an SNPN A network, and configured information about peer-to-peer networks of the SNPN A network may be shown in Table 1-1.

**Table 1-1**

| Access network of the UE | Equivalent list |
|---|---|
| SNPN A | SNPN B |
| | SNPN C |

Based on the content shown in Table 1-1, when the access network of the UE is the SNPN A, in a scenario in which the UE performs network selection, reselection, or switching, the UE may consider switching to a peer-to-peer network SNPN B or SNPN C of the SNPN A. In this way, the UE can implement network selection based on the information about the peer-to-peer network, so as to better ensure service continuity. It should be noted that a quantity of peer-to-peer networks of the UE is not limited during implementation of this application, and may be determined based on an actual situation of the UE.

It may be understood that, in the manner of configuring the information about the peer-to-peer network, corresponding equivalent lists may be respectively configured for access networks having peer-to-peer networks, and may be the same or may be different. For example, assuming that the access network of the UE is the SNPN B, the equivalent list corresponding to the access network of the UE may include the SNPN A and the SNPN C.

In another optional manner, another manner of configuring the information about the peer-to-peer network provided in this embodiment of this application is an equivalent group (equivalent group) form. For example, the access network of the UE is still the SNPN A network, and configured information about peer-to-peer networks of the SNPN A network may be shown in Table 1-2.

**Table 1-2**

| Equivalent group 1 |
|---|
| SNPN A |
| SNPN B |
| SNPN C |

Based on the content shown in Table 1-2, one equivalent group may include information about a plurality of access networks, and any two access networks are peer-to-peer networks with each other. For example, if a source access network of the UE is the SNPN A, it may be determined, based on the equivalent group 1 shown in Table 1-2, that the peer-to-peer networks of the SNPN A are the SNPN B and the SNPN C. Alternatively, if the source access network of the UE is the SNPN C, it may be determined, based on the equivalent group 1 shown in Table 1-2, that the peer-to-peer networks of the SNPN C are the SNPN A and the SNPN B. It may be understood that, UEs that respectively access the SNPN A, the SNPN B, and the SNPN C may obtain same information about the peer-to-peer networks (for example, the equivalent group shown in Table 1-2), and then the peer-to-peer network of each UE is determined based on the access network of the UE and the equivalent group shown in Table 1-2. Each equivalent group may be distinguished based on a different group identifier. For example, the equivalent group may be the equivalent group 1 shown in Table 1-2, and an equivalent group 2 may further exist. The equivalent group 2 may include an access network SNPN D, an access network SNPN E, an access network SNPN F, and the like.

It should be noted that, the configuration manner of the equivalent group may also be applied to a scenario in which the UE that accesses the PLMN performs network selection. In other words, in the conventional technology, when the UE selects the PLMN based on the information about the peer-to-peer network, the information about the peer-to-peer network may be in a form of an EPLMN list, or may be in the form of the equivalent group provided in this embodiment of this application. A manner of configuring information about peer-to-peer networks of a plurality of UEs may be simplified in the form of the equivalent group. In this way, compared with a configuration manner of using an equivalent list in the conventional technology in which information about a corresponding peer-to-peer network needs to be configured for each UE, in the configuration manner of using an equivalent group, a corresponding equivalent list does not need to be configured for each access network. A plurality of networks are configured in the equivalent group, so that a peer-to-peer network of any network can be determined, thereby improving configuration efficiency.

The following describes, by using an example in which an execution body is UE, a peer-to-peer network based network selection method provided in an embodiment of this application.

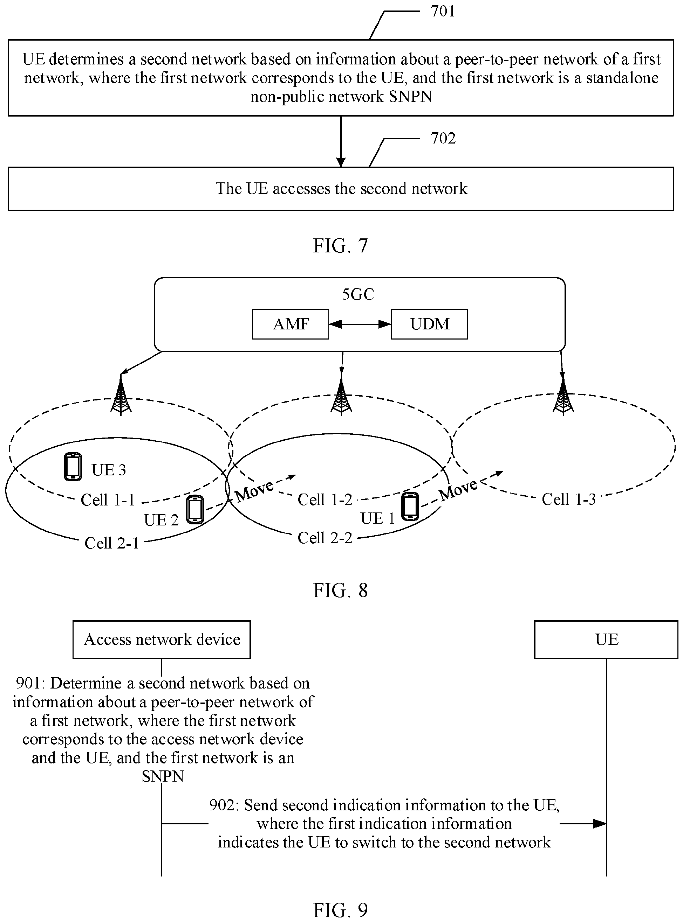

FIG. 7 is a schematic flowchart of a peer-to-peer network based network selection method according to an embodiment of this application. The method includes the following steps.

Step 701: The UE determines a second network based on information about a peer-to-peer network of a first network, where the first network corresponds to the UE, an access mode of the UE is a standalone non-public network SNPN access mode, and the first network is an SNPN.

For example, assuming that the first network is an SNPN A, the UE may determine, based on the information about the peer-to-peer network of the first network, that peer-to-peer networks of the SNPN A include an SNPN B and an SNPN C. When the UE needs to perform network selection, the UE may determine, based on the peer-to-peer SNPN B and the peer-to-peer SNPN C of the SNPN A, the second network, that is, a target access network.

Step 702: The UE accesses the second network.

Currently, related processes to ensure a connection between the UE and a network and ensure that the connection is not disconnected by movement of the UE are collectively referred to as mobile management (mobile management, MM). When the UE is in an idle state, the MM is mainly a cell selection/reselection (selection/reselection) process. When the UE is in a connected state, the MM is mainly a cell handover (handover) process. In different states of the UE, the UE may determine the second network in different implementations. For example, FIG. 8 is a schematic diagram of a scenario of another peer-to-peer network based network selection method to which an embodiment of this application is applicable. A cell 1-1, a cell 1-2, and a cell 1-3 are different cells in a network, and the network is referred to as a network 1. A cell 2-1 and a cell 2-2 are different cells in another network, and the network is referred to as a network 2. The network 1 and the network 2 are peer-to-peer networks with each other.

The following further describes, with reference to the scenario shown in FIG. 8, the method provided in this application. FIG. 8 may include the following three scenarios.

Scenario 1: For UE in a connection management (connection management, CM)-idle (idle) state, in a movement process of the UE, if a coverage area of the first network (that is, a source access network) accessed by the UE does not include a target camping area of the UE, the UE may trigger network selection. The UE in the CM-idle state indicates a state in which the UE implements registration but has no signaling interaction with an AMF. When the UE wants to communicate with a core network, if the UE is started for the first time or has been in the idle state for a period of time, the network deletes a resource to temporarily transmit data in this case. Therefore, the UE needs to establish a connection to an AMF access management function. This process is referred to as CM.

In an optional implementation, if a coverage area of at least one peer-to-peer network of the first network includes the target camping area of the UE, the UE determines the target access network from the at least one peer-to-peer network. Then, the UE accesses the target access network. In this way, efficiency of network selection can be improved, it is ensured that a network service of the UE is not interrupted, and service continuity is ensured.

For example, refer to FIG. 8. UE 1 is in the CM-idle state, a source access network of the UE 1 is the network 2, the UE 1 accesses the cell 2-2 included in the network 2, and the UE 1 moves in a movement direction shown in FIG. 8. As the UE 1 moves, the network 2 cannot cover a target camping area of the UE 1, and a coverage area of the cell 1-3 includes the target camping area of the UE. In this way, the UE may determine the network 1 as the target access network, and does not need to perform network searching, thereby improving efficiency of network selection and ensuring network service continuity.

The peer-to-peer network of the UE may be a peer-to-peer SNPN or a peer-to-peer PLMN. In addition, it is determined, based on that the first network of the UE is the SNPN, that the UE is in the SNPN access mode. In a possible example, the UE may determine the second network as follows. If at least one peer-to-peer SNPN exists in the peer-to-peer network, the UE determines the second network from the at least one peer-to-peer SNPN; or if no peer-to-peer SNPN exists in the peer-to-peer network, the UE sets an access mode to a PLMN access mode, and determines the second network from the at least one peer-to-peer network. It may be understood that the UE may preferentially select the peer-to-peer SNPN for access in the SNPN access mode, so that a service processing scenario of the UE can be better matched.

In another optional implementation, in a scenario in which the UE performs network selection, the UE may obtain not only the information about the peer-to-peer network of the UE, but also information about another selectable network. The information about the another selectable network is, for example, a network obtained by the UE through measurement, or a network included in a UE accessible network list. During implementation, the UE may further determine the second network based on the information about the peer-to-peer network of the first network and the information about the another selectable network. For example, if the coverage area of the peer-to-peer network of the UE also does not include the target camping area, the UE may determine the target access network based on the network obtained through measurement or the network included in the accessible network list.

During implementation of this application, after determining the target access network, the UE may further select a target camping cell. Optionally, the UE determines whether a coverage area of a cell corresponding to the source access network exists in the target camping area. If the coverage area of the cell corresponding to the source access network exists in the target camping area, the UE determines the target camping cell from first cells of the target camping area. The first cell is a cell corresponding to the first network. If the coverage area of the cell corresponding to the source access network does not exist in the target camping area, the UE determines the target camping cell from second cells of the target camping area. The second cell is a cell corresponding to the second network.

In another optional manner, the UE may determine the second network based on the information about the peer-to-peer network of the first network and the information about the another selectable network. Based on this, the first network may be the SNPN with which the UE registers. Alternatively, the first network may be an SNPN that is in the UE accessible network list and that meets a first priority requirement. The meeting a first priority requirement indicates that a priority of the SNPN is relatively high, and a network service requirement after the UE accesses the SNPN can be met. The first priority requirement may be predefined or obtained based on historical experience. Alternatively, if the UE sets the access mode to the PLMN access mode, the first network may be a PLMN that is in the UE accessible network list and that meets a second priority requirement. The meeting a second priority requirement indicates that a priority of the PLMN is relatively high, and a network service requirement after the UE accesses the PLMN can be met. The second priority requirement may also be predefined or obtained based on historical experience. It should be understood that the "first priority requirement" and the "second priority requirement" are merely used for differentiation, and are not used to limit a priority sequence of the "first priority requirement" and the "second priority requirement".

For example, to improve efficiency and quality of determining, by the UE, the target camping cell, the UE may further determine the target camping cell based on priorities. For example, this application provides a possible priority setting manner of determining the target camping cell, as shown in Table 2:

**Table 2**

| First priority | SNPN with which the UE registers |
|---|---|
| Second priority | Peer-to-peer network of the SNPN with which the UE registers |
| Third priority | SNPN that is in the UE accessible network list and that meets the first priority requirement |
| Fourth priority | Peer-to-peer network of the SNPN that is in the UE accessible network list and that meets the first priority requirement |
| Fifth priority | PLMN that is in the UE accessible network list and that meets the second priority requirement |
| Sixth priority | Peer-to-peer network of the PLMN that is in the UE accessible network list and that meets the second priority requirement |

The first priority to the sixth priority gradually decrease. Based on the content shown in Table 2, in a scenario in which the UE moves to the target camping area, the UE may sequentially perform the following steps to determine the target camping cell.

A1: If the UE determines that a coverage area of the first priority includes the target camping area, the UE determines the target camping cell from cells corresponding to the first priority. In this way, the UE can ensure a network connection through cell selection without network switching.

For example, refer to FIG. 8. If a coverage area of the network 2 includes the target camping area of the UE 1, the UE 1 may determine the target camping cell from the cells corresponding to the network 2. It should be understood that a coverage area of the target camping cell determined by the UE 1 includes the target camping area of the UE 1.

A2: If the UE determines that a coverage area of the second priority includes the target camping area, the UE determines the target camping cell from cells corresponding to the second priority. In this way, the UE can quickly switch to the target access network based on the peer-to-peer network.

For example, refer to FIG. 8. If the coverage area of the network 1 includes the target camping area of the UE 1, the UE 1 may determine the target camping cell from the cells corresponding to the network 1.

A3: If neither the cell corresponding to the SNPN with which the UE currently registers nor the cell corresponding to the peer-to-peer network of the SNPN with which the UE currently registers can be used as the target camping cell, and the UE determines that a coverage area of the third priority includes the target camping area of the UE, the UE may determine the target camping cell from cells corresponding to the third priority. Therefore, when neither the coverage area of the source access network of the UE nor the coverage area of the peer-to-peer network of the source access network can cover the target camping area of the UE, the UE may consider selecting an SNPN that is not equivalent to the source access network but has a relatively high priority, so as to ensure network access quality.

A4: If the UE determines that a coverage area of the fourth priority includes the target camping area of the UE, the UE may determine the target camping cell from cells corresponding to the fourth priority.

A5: If the UE determines that a coverage area of the fifth priority includes the target camping area of the UE, the UE may determine the target camping cell from cells corresponding to the fifth priority.

A6: If the UE determines that a coverage area of the sixth priority includes the target camping area of the UE, the UE may determine the target camping cell from cells corresponding to the sixth priority.

It should be noted that the foregoing content described with reference to Table 2 is an optional implementation provided in this application for determining, by the UE, the target camping cell, and is not intended to limit the method provided in this application. It may be understood that the UE may alternatively determine the target camping cell by using one or another combination of a plurality of types of networks, or in another manner of setting a priority. This may be set based on an actual situation of the UE during implementation.

In addition, after determining the second network, the UE may initiate a new registration procedure in the second network. For the registration procedure, refer to the registration procedure shown in FIG. 5. Details are not described in this application again.

Scenario 2: For UE in a CM-connected (connected) state, in a movement process of the UE, if the coverage area of the first network (that is, the source access network) accessed by the UE does not include the target camping area of the UE, the source access network may trigger network switching for the UE. The UE in the CM-connected state indicates a state in which signaling interaction exists between the UE and the AMF.

FIG. 9 is another schematic flowchart of a peer-to-peer network based network selection method according to an embodiment of this application. The method is applied to an access network device of the UE that is in the CM-connected state and that accesses the first network.

S901: The access network device may determine the second network based on the information about the peer-to-peer network of the first network, where the first network is the SNPN.

For example, if the coverage area of the at least one peer-to-peer network includes the target camping area, the access network device determines the second network from the at least one peer-to-peer network.

Similar to the process in which the UE in the CM-idle state performs network selection, the access network device determines the target access network of the UE, and may further select the target camping cell.

In an optional example, the access network device determines whether the coverage area of the cell corresponding to the source access network of the UE exists in the target camping area. If the coverage area of the cell corresponding to the source access network of the UE exists in the target camping area, the access network device determines the target camping cell of the UE from first cells of the target camping area. The first cell is a cell corresponding to the first network. If the coverage area of the cell corresponding to the source access network of the UE does not exist in the target camping area, the access network device determines the target camping cell of the UE from second cells of the target camping area. The second cell is a cell corresponding to the second network.

For example, with reference to UE 2 in FIG. 8, the UE 2 is in the CM-connected state, and a source access network of the UE 2 is the cell 2-1 included in the network 2, and the UE 2 moves in a movement direction shown in FIG. 8. As the UE 2 moves, a coverage area of the source camping cell of the UE 2 cannot cover a target camping area of the UE 2, and the target camping area belongs to coverage areas of the cell 2-2 and the cell 1-2. The cell 2-2 corresponds to the network 2, the cell 1-2 corresponds to the network 1, and the network 1 and the network 2 are equivalent. The access network device may determine that the cell 2-2 is used as the target camping cell of the UE. In this case, the UE does not need to perform network switching. Alternatively, the access network device may determine that the cell 1-2 is used as the target camping cell of the UE. In this case, the UE needs to switch from the network 2 to the network 1.

In another optional example, the access network device may alternatively determine the target camping cell of the UE based on cell measurement information reported by the UE and the information about the peer-to-peer network of the first network. For example, a network side determines the target camping cell of the UE based on the following steps.

B1: The access network device determines, based on the cell measurement information reported by the UE, a target camping cell that meets a level quality requirement. In this way, the access network device may ensure, with reference to the cell measurement information of the UE, that the determined target camping cell is a cell that meets the requirement.

B2: If there are a plurality of target camping cells that meet level quality, the access network device determines the target camping cell based on the following priorities:
B2-1: The access network device determines the target camping cell from cells that are included in the target camping area and that correspond to the SNPN with which the UE registers.
B2-2: If the target camping area does not include the cell corresponding to the SNPN with which the UE registers, the access network device determines the target camping cell from cells that are included in the target camping area and that correspond to the peer-to-peer network of the SNPN with which the UE registers.
B2-3: If B2-1 and B2-2 cannot be met, the access network device determines the target camping cell from cells that are included in the target camping area and that correspond to the SNPN that is in the UE accessible network list and that meets the first priority requirement. The meeting the first priority requirement indicates that a priority of the SNPN is relatively high and a network service requirement after the UE accesses the SNPN can be met. The first priority requirement may be predefined or obtained based on historical experience.
B2-4: If B2-3 cannot be met, the access network device determines the target camping cell from cells that are included in the target camping area and that correspond to the peer-to-peer network of the SNPN that is in the UE accessible network list and that meets the first priority requirement.

Based on the foregoing example, the access network device may determine the target camping cell in the target camping area for the UE. In addition, the access network device determines, based on preset priorities, the target camping cell for the UE, so that efficiency of performing, by the UE, network switching can be improved.

It should be noted that the access network device may further determine, based on other information, the target camping cell for the UE. The other information is, for example, a policy of a third-party network operator and network congestion information. During implementation, the other information may be combined with the information about the first network-based peer-to-peer network provided in this embodiment of this application. A specific implementation is not limited in this application.

S902: The access network device sends first indication information to the UE, where the first indication information indicates the UE to switch to the second network.

For example, the UE receives the first indication information, determines to switch to the second network, and may perform the registration procedure shown in FIG. 5, to access the second network.

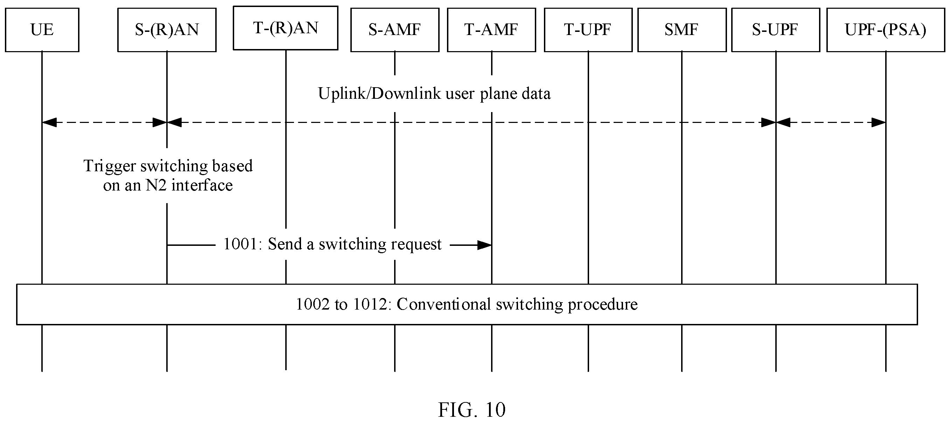

In an optional implementation, the access network device of the source access network sends, based on an N2 interface, a switching request to the target access network, to perform a network switching process for the UE. The N2 interface is an interface between the access network device and an AMF. FIG. 10 is a schematic flowchart of performing network switching by an access network device according to an embodiment of this application. The switching procedure is triggered based on the N2 interface.

S1001: The access network device of the source access network (S-(R)AN) sends a switching request to a T-AMF of the target access network (T-(R)AN). The switching request is used to switch from the source access network to the target access network for the UE.

S1002 to S1012: Refer to related content of a process in which the UE switches from the source access network to the target access network that is recorded in an existing procedure in section 4.9.1.3.2 of TS 23.502 in the 3GPP standard. Details are not described in this application again.

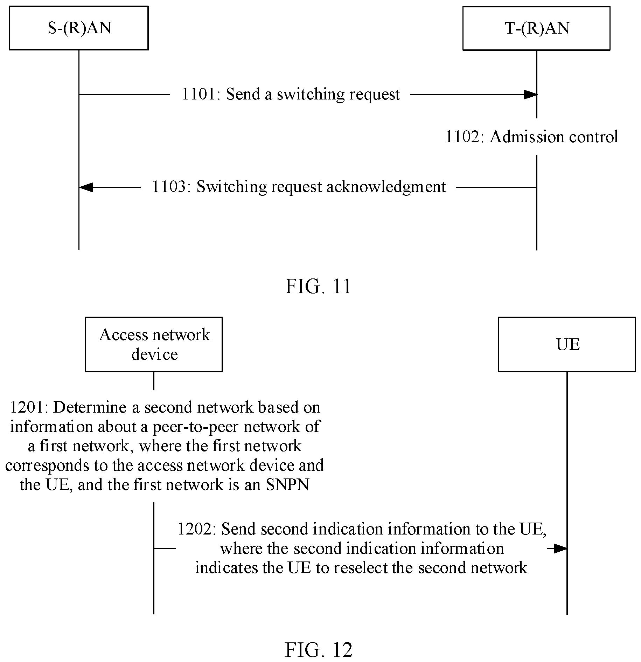

In another optional implementation, the access network device of the source access network may further send the switching request to the target access network based on an Xn interface, so as to perform a network switching process for the UE. The Xn interface is an interface between the source access network device and a target access network device. FIG. 11 is another schematic flowchart of performing a network switching by an access network device according to an embodiment of this application. The switching procedure is triggered based on the Xn interface.

S1101: The access network device of the source access network (S-(R)AN) sends a switching request to the access network device of the target access network (T-(R)AN). The switching request is used to switch from the source access network to the target access network for the UE.

S1102: The access network device of the target access network (T-(R)AN) performs admission control.

S1103: The access network device of the target access network (T-(R)AN) sends a switching request acknowledgment to the access network device of the source access network (S-(R)AN).

Scenario 3: For UE camping on the first network (that is, the source access network), the source access network of the UE may also trigger a network reselection process for the UE. For example, the UE is indicated to reselect a target access network with a better network service from the source access network.

FIG. 12 is still another schematic flowchart of a peer-to-peer network based network selection method according to an embodiment of this application. The method is applied to an access network device of the UE camping on the first network.

S1201: The access network device may determine the second network based on the information about the peer-to-peer network of the first network, where the first network is the SNPN.

For example, if coverage areas of the first network and the at least one peer-to-peer network of the first network include a camping area of the UE, the access network device determines the target access network for the UE from the first network and the at least one peer-to-peer network. Optionally, the access network device determines, based on serving network information of the first network and the at least one peer-to-peer network, a policy of a third-party network operator, network congestion information, and the like, a network with better network quality from the first network and the at least one peer-to-peer network. If the network with better network quality is different from the first network, the access network device performs a process of performing network reselection for the UE.

For example, with reference to UE 3 in FIG. 8, the UE 3 camps on a coverage area of the cell 1-1. A camping area of the UE 3 belongs to not only the coverage area of the cell 1-1 but also a coverage area of the cell 2-1. The access network device may determine the target camping cell from the cell 1-1 and the cell 2-1 based on network quality of the cell 1-1 and the cell 2-1. For example, when the network quality of the cell 2-1 is better than the network quality of the cell 1-1, the access network device indicates the UE to reselect the cell 2-1 corresponding to the network 2.

S1202: The access network device sends second indication information to the UE, where the second indication information indicates the UE to reselect the second network.

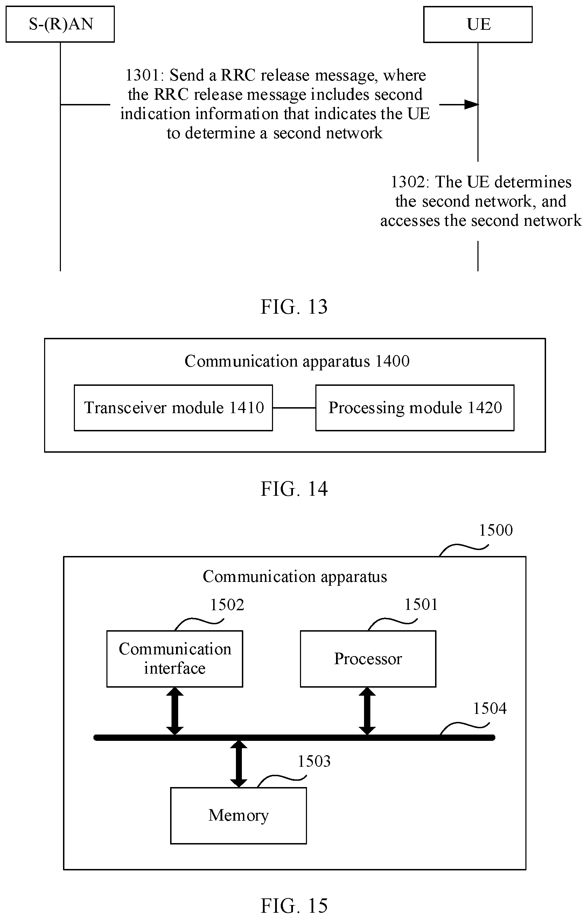

For example, the access network device indicates information about the second network to the UE by using an RRC release message. FIG. 13 is yet another schematic flowchart of a peer-to-peer network based network selection method according to an embodiment of this application. The method is applicable to a scenario in which the UE camps on the first network to perform network reselection.

S1301: The access network device of the source access network (S-(R)AN) sends the RRC release message to the UE, where the RRC release message includes second indication information that indicates the UE to determine the second network. For example, the second indication information may include auxiliary access information such as an identifier of the second network, a frequency of a cell corresponding to the second network, and a synchronization signal.

S1302: The UE determines the second network from the RRC release message, and accesses the second network. For example, after receiving the RRC release message, the UE performs network reselection based on the second indication information included in the RRC release message. This may be implemented as follows: The UE sends the registration procedure shown in FIG. 5 to the second network, to reselect the second network.

According to the peer-to-peer network based network selection methods provided in embodiments of this application, network selection, reselection, or switching for the UE that accesses the SNPN can be implemented, and the peer-to-peer network of the source access network is preferentially selected for the UE, or a network with a relatively high priority in the UE accessible network list and a peer-to-peer network of the network are preferentially selected. In this way, network quality of the network selected by the UE can be ensured, and reliability of network selection, reselection, and switching can be improved, to ensure continuity of service processing.

Based on a same technical concept as method embodiments, an embodiment of this application further provides a communication apparatus. FIG. 14 is a schematic diagram of a structure of a communication apparatus according to an embodiment of this application. The communication apparatus 1400 includes a transceiver module 1410 and a processing module 1420. The communication apparatus may be configured to implement functions of the UE according to any one of the foregoing method embodiments. The communication apparatus may be UE or a chip or a circuit included in the UE.

The processing module 1420 may be configured to determine a second network based on information about a peer-to-peer network of a first network, where the first network corresponds to the UE, and the first network is a standalone non-public network SNPN. The processing module 1420 may be further configured to access the second network.

In a possible design, the UE is in an idle state. When determining the second network based on the information about the peer-to-peer network of the first network, the processing module 1420 may be specifically configured to: if a coverage area of the first network does not include a target camping area of the UE, and a coverage area of the at least one peer-to-peer network includes the target camping area, determine the second network from the at least one peer-to-peer network.

In a possible design, when determining the second network from the at least one peer-to-peer network, the processing module 1420 may be specifically configured to: if at least one peer-to-peer SNPN exists in the peer-to-peer network, determine the second network from the at least one peer-to-peer SNPN; or if no peer-to-peer SNPN exists in the peer-to-peer network, set an access mode to a PLMN access mode, and determine the second network from the at least one peer-to-peer network.

In a possible design, the processing module 1420 may be further configured to determine a target camping cell from first cells of the target camping area, where the first cells are corresponding to the first network; or the processing module 1420 may be further configured to determine a target camping cell from second cells of the target camping area, where the second cells are corresponding to the second network, and a cell of the target camping area does not include a cell corresponding to the first network.

In a possible design, the first network may be an SNPN with which the UE registers; or the first network may be an SNPN that is in an accessible network list of the UE and that meets a first priority requirement; or if the UE sets the access mode to a PLMN access mode, the first network may be a PLMN that is in an accessible network list of the UE and that meets a second priority requirement.

In a possible design, the UE is in a connected state, and the transceiver module 1410 may be further configured to receive first indication information from an access network device, where the first indication information indicates the UE to switch to the second network.

In a possible design, the UE camps on the first network, and the transceiver module 1410 may be further configured to receive second indication information from an access network device, where the second indication information indicates the UE to reselect the second network.

In a possible design, the second indication information may be carried in a radio resource control RRC release (release) message.

In a possible design, the information about the peer-to-peer network of the first network may include an equivalent group, the equivalent group includes information about at least two networks, any two of the networks are peer-to-peer networks with each other, and the networks include the first network.

Based on a same technical concept as method embodiments, with reference to FIG. 14, the communication apparatus 1400 may be further configured to implement functions of the access network device in any one of the foregoing method embodiments. The communication apparatus may be the access network device or a chip or a circuit included in the access network device.

The processing module 1420 may be configured to determine a second network based on information about a peer-to-peer network of a first network, where the first network corresponds to the access network device and UE, and the first network is an SNPN. The transceiver module 1410 may be configured to send indication information to the UE, where the indication information indicates the UE to determine the second network.

In a possible design, the UE is in a connected state. When determining the second network based on the information about the peer-to-peer network of the first network, the processing module 1420 may be specifically configured to: if a coverage area of the first network does not include a target camping area of the UE, and a coverage area of the at least one peer-to-peer network includes the target camping area, determine the second network from the at least one peer-to-peer network.

In a possible design, the processing module 1420 may be further configured to determine a target camping cell of the UE from first cells of the target camping area, where the first cell is a cell corresponding to the first network; or the processing module 1420 may be further configured to determine a target camping cell of the UE from second cells of the target camping area, where the second cell is a cell corresponding to the second network, and a cell of the target camping area does not include a cell corresponding to the first network.

In a possible design, the first network may be an SNPN with which the UE registers, or the first network is an SNPN that is in an accessible network list of the UE and that meets a first priority requirement.

In a possible design, the UE is in a connected state. When sending the indication information to the UE, the transceiver module 1410 may be specifically configured to send first indication information, where the first indication information indicates the UE to switch to the second network.

In a possible design, the UE camps on the first network, and the transceiver module 1410 may be configured to: send indication information to the UE, and specifically sends second indication information, where the second indication information indicates the UE to reselect the second network.

In a possible design, the second indication information may be carried in an RRC release message.

In a possible design, the information about the peer-to-peer network of the first network may include an equivalent group, the equivalent group may include information about at least two networks, any two of the networks are peer-to-peer networks with each other, and the networks include the first network.

It should be noted that the processing module 1420 in the communication apparatus 1400 may be implemented by at least one processor or a processor-related circuit component. The transceiver module 1410 may be implemented by at least one transceiver, a transceiver-related circuit component, or a communication interface. Operations and/or functions of modules in the communication apparatus are respectively for implementing the corresponding procedures of the methods shown in FIG. 5 to FIG. 13. For brevity, details are not described herein again. Optionally, the communication apparatus may further include a storage module. The storage module may be configured to store data and/or instructions. The transceiver module 1410 and/or the processing module 1420 may read the data and/or the instructions in the storage module, so that the communication apparatus implements the corresponding method. The storage module may be implemented, for example, through at least one memory.

The storage module, the processing module, and the transceiver module may exist separately, or all or some of the modules may be integrated. For example, the storage module and the processing module are integrated, or the processing module and the transceiver module are integrated.

FIG. 15 is a schematic diagram of another structure of a communication apparatus according to an embodiment of this application. The communication apparatus 1500 may be configured to implement functions corresponding to the UE in the foregoing method embodiments or configured to implement functions corresponding to the access network device in the foregoing method embodiments. The communication apparatus 1500 may be the UE, an apparatus that can support the UE in implementing corresponding functions in the foregoing method embodiments, or the like. Alternatively, the communication apparatus 1500 may be the access network device, an apparatus that can support the access network device in implementing corresponding functions in the foregoing method embodiments, or the like.

The communication apparatus 1500 may include a processor 1501, a communication interface 1502, and a memory 1503. The communication interface 1502 is configured to communicate with another device by using a transmission medium. The communication interface 1502 may be a transceiver, or may be an interface circuit such as a transceiver circuit or a transceiver chip. The memory 1503 is configured to store program instructions and/or data, and the processor 1501 is configured to execute the program instructions stored in the memory 1503, to implement the methods in the foregoing method embodiments. Optionally, the memory 1503 is coupled to the processor 1501. The coupling is an indirect coupling or a communication connection between apparatuses, units, or modules, may be in an electrical, mechanical, or another form, and is used for information interaction between the apparatuses, the units, or the modules.

In an embodiment, the communication interface 1502 may be specifically configured to execute an action of the transceiver module 1410, and the processor 1501 may be specifically configured to execute an action of the processing module 1420. Details are not described herein again in this application.

In this embodiment of this application, a specific connection medium between the communication interface 1502, the processor 1501, and the memory 1503 is not limited. In this embodiment of this application, in FIG. 15, the memory 1503, the processor 1501, and the communication interface 1502 are connected through a bus 1504. The bus is represented with a thick line in FIG. 15. A connection manner between other components is merely an example description, but does not constitute a limitation. The bus may be classified into an address bus, a data bus, a control bus, and the like. For ease of representation, only one thick line is used to represent the bus in FIG. 15, but this does not mean that there is only one bus or only one type of bus.

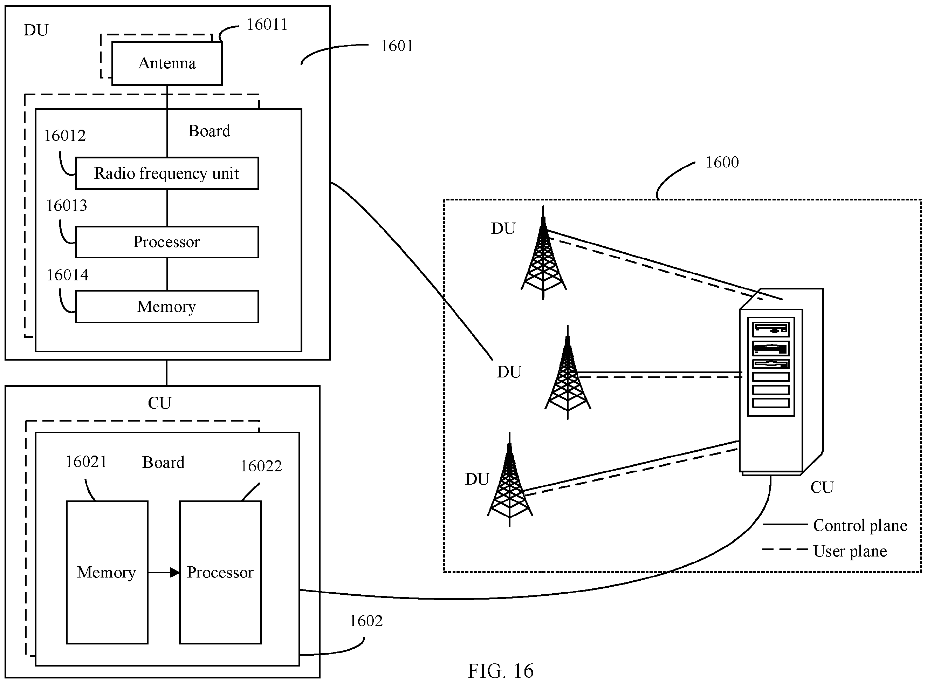

FIG. 16 is a schematic diagram of another structure of a communication apparatus according to an embodiment of this application. The communication apparatus 1600 may be configured to implement functions of the access network device in any one of the foregoing method embodiments. The communication apparatus 1600 is specifically an access network device, for example, a base station.

The access network device 1600 includes one or more DUs 1601 and one or more CUs 1602. The DU 1601 may include at least one antenna 16011, at least one radio frequency unit 16012, at least one processor 16013, and at least one memory 16014. The DU 1601 is mainly configured to: transmit and receive a radio frequency signal, perform conversion between the radio frequency signal and a baseband signal, and perform some baseband processing.

The CU 1602 may include at least one processor 16022 and at least one memory 16021. The CU 1602 is mainly configured to perform baseband processing, control the base station, and the like. The CU 1602 is a control center of the base station, and may also be referred to as a processing unit. For example, the CU 1602 may be configured to control the base station to perform operations or steps corresponding to a first access network device in the methods shown in FIG. 5 to FIG. 15.

The CU 1602 and the DU 1601 may communicate with each other through an interface. A control plane (control plane, CP) interface may be an Fs-C, for example, an F1-C, and a user plane (user plane, UP) interface may be an Fs-U, for example, an F1-U. The DU 1601 and the CU 1602 may be physically disposed together, or may be physically disposed separately (that is, a distributed base station). This is not limited.

Specifically, baseband processing on the CU and the DU may be divided based on a protocol layer of a wireless network. For example, functions of a PDCP layer and a protocol layer above the PDCP layer are deployed on the CU, and functions of protocol layers below the PDCP layer (such as an RLC layer and a MAC layer) are deployed on the DU. For another example, the CU implements functions of an RRC layer and the PDCP layer, and the DU implements functions of the RLC layer, the MAC layer, and a physical (physical, PHY) layer.

Optionally, the access network device 1600 may include one or more radio frequency units (RUs), one or more DUs, and one or more CUs. The DU may include the at least one processor 16013 and the at least one memory 16014, the RU may include the at least one antenna 16011 and the at least one radio frequency unit 16012, and the CU may include the at least one processor 16022 and the at least one memory 16021.

In an embodiment, the CU 1602 may include one or more boards. A plurality of boards may jointly support a radio access network (for example, a 5G network) with a single access standard, or may separately support radio access networks (for example, LTE networks, 5G networks, or other networks) with different access standards. The memory 16021 and the processor 16022 may serve the one or more boards. In other words, a memory and a processor may be disposed on each board. Alternatively, the plurality of boards may share a same memory and a same processor. In addition, a necessary circuit may be disposed on each board.

The DU 1601 may include one or more boards. A plurality of boards may jointly support a radio access network (for example, a 5G network) with a single access standard, or may separately support radio access networks (for example, LTE networks, 5G networks, or other networks) with different access standards. The memory 16014 and the processor 16013 may serve the one or more boards. In other words, a memory and a processor may be disposed on each board. Alternatively, the plurality of boards may share a same memory and a same processor. In addition, a necessary circuit may be disposed on each board.

An embodiment of this application further provides a chip system, including a processor. The processor is coupled to a memory. The memory is configured to store a program or instructions. When the program or the instructions is/are executed by the processor, the chip system is enabled to implement the method of the corresponding UE or access network device according to any one of the foregoing method embodiments.

Optionally, there may be one or more processors in the chip system. The processor may be implemented through hardware, or may be implemented through software. When the processor is implemented through the hardware, the processor may be a logic circuit, an integrated circuit, or the like. When the processor is implemented through the software, the processor may be a general-purpose processor, and is implemented by reading software code stored in the memory.

Optionally, there may also be one or more memories in the chip system. The memory may be integrated with the processor, or may be disposed separately from the processor. This is not limited in this application. For example, the memory may be a non-transitory processor, for example, a read-only memory ROM. The memory and the processor may be integrated on a same chip, or may be separately disposed on different chips. A type of the memory and a manner of disposing the memory and the processor are not specifically limited in this application.

For example, the chip system may be a field programmable gate array (field programmable gate array, FPGA), an application specific integrated circuit (application specific integrated circuit, ASIC), a system on chip (system on chip, SoC), a central processing unit (central processing unit, CPU), a network processor (network processor, NP), a digital signal processing circuit (digital signal processor, DSP), a micro controller unit (micro controller unit, MCU), a programmable controller (programmable logic device, PLD), or another integrated chip.

It should be understood that the steps in the foregoing method embodiments may be completed through a hardware integrated logic circuit or instructions in a form of software in the processor. The steps of the methods disclosed with reference to embodiments of this application may be directly performed by a hardware processor, or may be performed by a combination of hardware and software modules in the processor.

An embodiment of this application further provides a computer-readable storage medium. The computer storage medium stores computer-readable instructions. When a computer reads and executes the computer-readable instructions, the computer is enabled to perform the method according to any one of the foregoing method embodiments.

An embodiment of this application further provides a computer program product. When a computer reads and executes the computer program product, the computer is enabled to perform the method according to any one of the foregoing method embodiments.

It should be understood that, the processor in embodiments of this application may be a CPU, or may be another general-purpose processor, a DSP, an ASIC, an FPGA or another programmable logic device, a discrete gate or a transistor logic device, a discrete hardware component, or the like. The general-purpose processor may be a microprocessor, or the processor may be any conventional processor or the like.

It should further be understood that the memory in embodiments of this application may be a volatile memory or a non-volatile memory, or may include a volatile memory and a non-volatile memory. The non-volatile memory may be a read-only memory (read-only memory, ROM), a programmable read-only memory, an erasable programmable read-only memory, an electrically erasable programmable read-only memory, or a flash memory. The volatile memory may be a random access memory (random access memory, RAM), used as an external cache. By way of illustrative rather than limitative description, many forms of RAMs are available, for example, a static random access memory, a dynamic random access memory, a synchronous dynamic random access memory, a double data rate synchronous dynamic random access memory, an enhanced synchronous dynamic random access memory, a synchronous connection dynamic random access memory, and a direct memory bus random access memory.

It should be noted that when the processor is a general-purpose processor, a DSP, an ASIC, an FPGA, or another programmable logic device, a discrete gate or a transistor logic device, or a discrete hardware component, the memory (a storage module) is integrated into the processor.

It should be noted that, the memory described in this specification intends to include, but not limited to, these memories and any other memory of an appropriate type.

It should be understood that numbers in various embodiments of this application are merely used for differentiation for ease of description. Sequence numbers of the foregoing processes or steps do not mean execution sequences. The execution sequences of the processes or steps should be determined based on functions and internal logic of the processes or steps, and should not constitute any limitation on the implementation processes of embodiments of the present invention.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing apparatus embodiments are merely examples. For example, division of the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, technical solutions of this application essentially, or the part contributing to the conventional technology, or some of the technical solutions may be implemented in a form of a software product. The computer software product is stored in a storage medium, and includes a plurality of instructions for instructing a computer device (which may be a personal computer, a server, an access network device, or the like) to perform all or some of the steps of the methods described in embodiments of this application. The foregoing storage medium includes any medium that can store program code, such as a USB flash drive, a removable hard disk, a ROM, a RAM, a magnetic disk, or an optical disc.

In embodiments of this application, unless otherwise stated or there is a logic conflict, terms and/or descriptions between different embodiments are consistent and may be mutually referenced, and technical features in different embodiments may be combined based on an internal logical relationship thereof, to form a new embodiment.

## Claims

1. A peer-to-peer network based network selection method, comprising:
determining, by a terminal device, a second network based on information about a peer-to-peer network of a first network, wherein the first network corresponds to the terminal device, and the first network is a standalone non-public network SNPN; and
accessing, by the terminal device, the second network.

2. The method according to claim 1, wherein the terminal device is in an idle state, and the determining, by a terminal device, a second network based on information about a peer-to-peer network of a first network comprises:
if a coverage area of the first network does not comprise a target camping area of the terminal device, and a coverage area of at least one of the peer-to-peer network comprises the target camping area, determining, by the terminal device, the second network from the at least one peer-to-peer network.

3. The method according to claim 2, wherein the determining, by the terminal device, the second network from the at least one peer-to-peer network comprises:
if at least one peer-to-peer SNPN exists in the peer-to-peer network, determining, by the terminal device, the second network from the at least one peer-to-peer SNPN; or
if no peer-to-peer SNPN exists in the peer-to-peer network, exiting, by the terminal device, an SNPN access mode, and determining the second network from the at least one peer-to-peer network.

4. The method according to claim 2 or 3, wherein the method further comprises:
determining, by the terminal device, a target camping cell from first cells of the target camping area, wherein the first cells are corresponding to the first network; or
determining, by the terminal device, a target camping cell from second cells of the target camping area, wherein the second cells are corresponding to the second network, and a cell of the target camping area does not comprise a cell corresponding to the first network.

5. The method according to any one of claims 2 to 4, wherein
the first network is an SNPN with which the terminal device registers; or
the first network is an SNPN that is in an accessible network list of the terminal device and that meets a first priority requirement; or
if the terminal device exits the SNPN access mode, the first network is a PLMN that is in an accessible network list of the terminal device and that meets a second priority requirement.

6. The method according to any one of claims 1 to 5, wherein the terminal device is in a connected state, and the method further comprises:
receiving, by the terminal device, first indication information from an access network device, wherein the first indication information indicates the terminal device to switch to the second network.

7. The method according to any one of claims 1 to 5, wherein the terminal device camps on the first network, and the method further comprises:
receiving, by the terminal device, second indication information from an access network device, wherein the second indication information indicates the terminal device to reselect the second network.

8. The method according to claim 7, wherein the second indication information is carried in a radio resource control RRC release (release) message.

9. The method according to any one of claims 1 to 8, wherein the information about the peer-to-peer network of the first network comprises an equivalent group, the equivalent group comprises information about at least two networks, any two of the networks are peer-to-peer networks with each other, and the networks comprise the first network.

10. A peer-to-peer network based network selection method, comprising:
determining, by an access network device, a second network based on information about a peer-to-peer network of a first network, wherein the first network corresponds to the access network device and a terminal device, and the first network is an SNPN; and
sending, by the access network device, indication information to the terminal device, wherein the indication information indicates the terminal device to determine the second network.

11. The method according to claim 10, wherein the terminal device is in a connected state, and the determining, by an access network device, a second network based on information about a peer-to-peer network of a first network comprises:
if a coverage area of the first network does not comprise a target camping area of the terminal device, and a coverage area of at least one of the peer-to-peer network comprises the target camping area, determining, by the access network device, the second network from the at least one peer-to-peer network.

12. The method according to claim 11, wherein the method further comprises:
determining, by the access network device, a target camping cell of the terminal device from first cells of the target camping area, wherein the first cells are corresponding to the first network; or
determining, by the access network device, a target camping cell of the terminal device from second cells of the target camping area, wherein the second cells are corresponding to the second network, and a cell of the target camping area does not comprise a cell corresponding to the first network.

13. The method according to claim 11 or 12, wherein the first network is an SNPN with which the terminal device registers; or
the first network is an SNPN that is in an accessible network list of the terminal device and that meets a first priority requirement.

14. The method according to any one of claims 10 to 13, wherein the terminal device is in a connected state, and the sending, by the access network device, indication information to the terminal device comprises:
sending, by the access network device, first indication information, wherein the first indication information indicates the terminal device to switch to the second network.

15. The method according to any one of claims 10 to 13, wherein the terminal device camps on the first network, and the sending, by the access network device, indication information to the terminal device comprises:
sending, by the access network device, second indication information, wherein the second indication information indicates the terminal device to reselect the second network.

16. The method according to claim 15, wherein the second indication information is carried in an RRC release message.

17. The method according to any one of claims 10 to 16, wherein the information about the peer-to-peer network of the first network comprises an equivalent group, the equivalent group comprises information about at least two networks, any two of the networks are peer-to-peer networks with each other, and the networks comprise the first network.

18. A communication apparatus, wherein the apparatus comprises at least one processor, and the at least one processor is coupled to at least one memory; and
the at least one processor is configured to execute a computer program or instructions stored in the at least one memory, and the apparatus is enabled to perform the method according to any one of claims 1 to 9, or the apparatus is enabled to perform the method according to any one of claims 10 to 17.

19. A communication apparatus, comprising a processor and an interface circuit, wherein
the interface circuit is configured to exchange code instructions or data with the processor; and
the processor is configured to perform the method according to any one of claims 1 to 9, or the processor is configured to perform the method according to any one of claims 10 to 17.

20. A computer-readable storage medium, wherein the computer-readable storage medium is configured to store instructions, and when the instructions are executed, the method according to any one of claims 1 to 9 is implemented, or the method according to any one of claims 10 to 17 is implemented.
